# EUROPEAN PATENT SPECIFICATION

(11) **EP 1 396 519 B1**
(45) Date of publication and mention of the grant of the patent: **21.11.2007**
(21) Application number: 03077209.9
(22) Date of filing: 14.07.2003
(51) Int. Cl.: C08J 9/00, C08J 9/16

(54) **Extruded metal containing expandable polystyrene beads**
Extrudierte expandierbare metallhaltige Polystyrolperlen
Perles de polystyrene extrudées, contenant un métal.

(30) Priority: 19.07.2002 NL 1021110
(43) Date of publication of application: 10.03.2004
(73) Proprietor: SYNBRA TECHNOLOGY B.V., 4871 NM Etten-Leur (NL)
(72) Inventor: Noordegraaf, Jan, 6602 ZX Wychen (NL)
(74) Representative: Blokland, Arie

(56) References cited:
- DE-U- 20 108 311

## Description

Method for the production of expandable polystyrene (EPS), as well as particulate expandable polystyrene and foam materials obtained on the basis thereof.

The present invention relates to a method for the production of expandable polystyrene (EPS), wherein styrene polymer, a blowing agent, a thermal insulation value increasing agent and usual additives are jointly extruded in an extruder. The present invention furthermore relates to particulate, expandable polystyrene which can be processed into a foam having a fine cell structure and a low density, and which contains a thermal insulation value increasing material for improving the thermal insulation value thereof. Furthermore the present invention relates to polystyrene materials with a base of particulate expandable polystyrene.

Such a method is known per se from International patent application WO 00/43442, in which styrene polymer is melted in an extruder and mixed with at least one blowing agent and aluminium particles, mainly in the form of platelets, said materials being jointly extruded, with the amount of aluminium particles not exceeding 6 wt. %, after which the extruded material is cooled and reduced to obtain particles. Such polymers contain at least aluminium in the form of particles so as to improve the thermal insulation properties thereof, with the aluminium particles being incorporated in a homogeneous distribution as an infrared radiation reflecting material. The aluminum particles have the shape of platelets having a size between 1 and 15 µm.

From German Gebrauchsmusterschrift DE 201 08 311 U1 there is known a sound insulation element containing expanded styrene polymer, with the styrene polymer having a density of less than 15 kg/m³ and a particulate additive being uniformly distributed in the styrene polymer, which additive has a density higher than the styrene polymer. The additive is an infrared radiation reflecting or absorbing material in the form of metal particles, in particular aluminium having the shape of platelets, or a metal oxide, a non-metal oxide, antimonium trisulphides, carbon black or graphite.

The raw material that is used for the production of expandable polystyrene (EPS) can be obtained not only via the extrusion process as known from the aforesaid International patent application, but also via suspension polymerisation. The EPS granulate thus obtained is generally used as a raw material in the packaging industry and in the construction industry. The method for further processing comprises a pre-foaming step, in which an amount of steam is passed through a layer of EPS granules in an expansion vessel, as a result of which the blowing agent that is present in the EPS granules, usually pentane, is evaporated and foaming of the granules takes place. After a storage period of about 4-48 hours, also referred to as setting, the pre-foamed granules are charged to a mould, in which the granules are further expanded under the influence of steam. The mould that is used in this process is provided with small apertures, so that the blowing agent that is still present can escape during the expansion process, whilst the granules fuse to the desired shape. In principle there are no limitations as regards the dimension of said mould, and it is possible to produce blocks for the construction industry as well as meat dishes or fish boxes.

With the production of EPS granules, a particle size having a so-called Gaussian distribution, generally ranging from 0.3 mm to 2.5 mm, is obtained. In practice it has been found that the fraction having a particle size of < 0.3 mm is in fact unsuitable for normal packaging materials, and that particles having a particle size of < 0.6 mm are not suitable for construction purposes. Although the particle size can be influenced within certain ranges during the suspension polymerisation, a number of residual fractions will in principle remain at all times, viz. small particles having a particle size of < 0.4 mm and large particles having a particle size of > 2.4 mm. Since such residual fractions still contain valuable materials, the present Applicant has developed a method for recycling said materials in an extruder. The starting material, viz. residual fraction having a small or large particle size, is supplied to the extruder, with the blowing agent completely migrating out of the starting material during the extrusion process and being discharged via a vent port connected to the extruder and being burned in an integrated after-burner process, during which process steam may be generated. The granulate, from which the blowing agent has thus been removed, is carried out of the extruder via a heated extrusion head and chopped into small particles. A problem that occurs with such a recycling process is that the expandable polystyrene (EPS) frequently comprises fire retardants in addition to a blowing agent, which fire retardants start to decompose at the temperatures that prevail in the extruder, with halogen radicals being separated, as a consequence of which the chain length of polystyrene is undesirably reduced. Moreover, this may lead to corrosion of the extruder resulting from the formation of halogen gas. Thus, the residual fractions are not recycled as 100% material.

One aspect of the present invention is to provide a method for the production of expandable polystyrene (EPS) in which styrene polymer can be converted in the presence of one or more additional components into a material having a special added value.

Another aspect of the present invention is to provide a method for the production of expandable polystyrene (EPS), in which EPS is obtained whose thermal conduction coefficient is sufficiently low, as desired in practice, for use thereof for thermal insulation purposes.

The method as referred to in the introduction is characterized in that a metal selected from the group of iron, copper and zinc, an alloy with the provisio that a copper containing alloy is excluded, except copper alloys containing aluminium and CuZn₇₀ or a combination thereof is used as the thermal insulation value increasing agent.

Because a metal selected from the group consisting of iron, copper and zinc, an alloy with the provisio that a copper containing alloy is excluded, except copper alloys containing aluminium and CuZn₇₀ or a combination thereof is used, the joint processing in an extruder of styrene polymer, a blowing agent, usual additives and the aforesaid thermal insulation value increasing agent is feasible without any problem. In addition, an expandable polystyrene having a desired low thermal insulation value is obtained. Possible alloys include, for example: copper alloys containing aluminium, such as Cu-Al 10%, aluminium alloys containing copper, such as Al-Cu 33%, Al-Cu 3%, Al-Cu 0,1%, alloys comprising a combination of zinc and aluminium, such as Zn-Al 4%, Zn-Al 30% and Zn-Al 50%.

In order to achieve a very good process in the extruder and obtain a product having a good insulation value, it is preferable to use copper, a copper-containing alloy, or a combination thereof.

The amount of thermal insulation value increasing agent, preferably in the form of powder, is 1-10 wt. %, preferably 2-5 wt. %, based on the amount of styrene polymer.

If an amount of less than 1 wt. % is used, an insufficient increase of the thermal insulation value will be obtained, whilst an amount of more than 10 wt. % does not substantially contribute towards increasing the thermal insulation value.

To obtain a very good thermal insulation value as well as a trouble-free process in an extruder, it is preferable to use copper in an amount of 2.5-3 wt. %, based on the amount of styrene polymer.

Using the present method it has appeared to be possible to process styrene polymer having a particle size of < 0.4 mm in an extruder without any problems worth mentioning. In certain embodiments, on the other hand, it is also possible to use styrene polymer having a particle size of > 2.4 mm. In a specific embodiment it is moreover desirable to use styrene polymer having a particle size of 0.7-1.0 mm, a particle size of 1.0-2.4 mm, or a combination thereof.

In order to obtain expandable polystyrene (EPS) exhibiting a good fire-retarding activity, the styrene polymer preferably comprises a fire retardant, in particular hexabromium cyclododecane (HBCD), before the extrusion takes place.

In a specific embodiment it is desirable to supply additionally other thermal insulation value increasing agents to the extruder, in particular one or more of the substances graphite, aluminium powder, Al(OH)₃, Mg(OH)₂ and Al₂O₃. Thus it is also possible to add the aforesaid materials to the extruder in combination with the group consisting of iron, copper and zinc, and alloy with the provisio that a copper containing alloy is excluded, except copper alloys containing aluminium and CuZn₇₀ or a combination thereof.

If the product obtained after the extrusion process is to meet stringent fire safety requirements, it is desirable to additionally supply one or more fire retardants selected from the group consisting of hexabromium cyclododecane (HBCD), dicumyl peroxide and 2,3-dimethyl-2,3-diphenylbutane in an amount of 1.0-8 wt. %, based on the amount of styrene polymer, to the extruder during the extrusion process.

The present invention furthermore relates to a particulate, expandable polystyrene which can be processed into a foam having a fine cell structure and a low density, and which, in order to improve the thermal insulation value thereof, contains a thermal insulation value increasing agent, characterized in that a metal selected from the group consisting of iron, copper and zinc, and alloy with the provisio that a copper containing alloy is excluded, except copper alloys containing aluminium and CuZn₇₀ or a combination thereof is present in the polystyrene particles as a thermal insulation value increasing material in a homogeneous distribution.

Preferably, the thermal insulation value increasing agent is present in an amount of 1-10 wt. %, preferably 2-5 wt. %, based on the amount of styrene polymer. In order to obtain a proper homogeneous distribution in the final product, it is preferable to add the thermal insulation value increasing agent in the form of powder.

A very suitable starting material is styrene polymer having a particle size of < 0.4 mm, with styrene polymer having a particle size of > 2.4 mm being preferred in specific embodiment. Other embodiments apply a styrene polymer having a particle size of 0.7-1.0 mm, in particular a particle size of 1.0-2.4 mm, or a combination thereof.

In a specific embodiment, the styrene polymer preferably comprises a fire retardant, in particular hexabromium cyclododecane (HBCD), before being supplied to the extruder.

In order to obtain an even better thermal insulation value, the particulate expandable polystyrene obtained after the extrusion process preferably contains one or more of the substances graphite, aluminium powder, Al(OH)₃, Mg(OH)₂ and Al₂O₃.

The present invention furthermore relates to polystyrene foam materials with a base of particulate expandable polystyrene as described above, with the present polystyrene foam materials in particular being used for thermal insulation purposes.

The present invention will be explained in more detail hereinafter by means of a number of examples, in which connection it should be noted that the present invention is by no means limited to such specific examples. All the percentages mentioned in the examples are weight percentages.

### Example 1.

A blowing agent, styrene polymer having a particle size of 0.4 mm and a hexabromium cyclododecane (HBCD) content of 0.8% and an amount of dicumyl peroxide of 0.3% were supplied to an extruder, with copper in powder form being co-extruded as a thermal insulation value increasing agent in an amount of 1.6%. The obtained results are summarized in the table below.

### Example 2.

The experiment of Example 1 was repeated, with this difference that copper was used in an amount of 3.2%. The obtained results are summarized in the table below.

### Example 3.

The experiment of Example 1 was repeated, with this difference that copper was used in an amount of 4.0%. The obtained results are summarized in the table below.

### Comparative example 1.

A blowing agent and styrene polymer having a particle size of 0.4 mm and a HBCD content of 0.8% were supplied to an extruder, with aluminium in powder form having a particle size of 5 µm being co-extruded as a thermal insulation value increasing agent in an amount of 0.4%. Inside the extruder a reaction with the peroxide compound took place, resulting in foaming of the styrene polymer granules, which is undesirable. The obtained lambda value is high. The obtained results are summarized in the table below.

### Comparative example 2.

The experiment of comparative example 1 was repeated, with this difference that the styrene polymer also contained dicumyl peroxide in an amount of 0.3%. Inside the extruder, a light degree of expansion took place, and the obtained lambda value is in the same order of magnitude as in Comparative example 1. The obtained results are summarized in the table below.

### Example 4.

The experiment of Example 1 was repeated, with this difference that CuZn₇₀ was co-extruded as a thermal insulation value increasing agent in an amount of 1.2%. The obtained results are summarized in the table below.

### Example 5.

The experiment of Example 4 was repeated, with this difference that CuZn₇₀ was used in an amount of 2.8%. The obtained results are summarized in the table below.

### Example 6.

The experiment of Example 1 was repeated, with this difference that copper being the master batch, was co-extruded as a thermal insulation value increasing agent in an amount of 1.2%. The obtained results are summarized in the table below.

### Example 7.

The experiment of Example 6 was repeated, with this difference that copper was co-extruded in an amount of 2.4%. The obtained results are summarized in the table below.

### Example 8.

The experiment of Example 6 was repeated, with this difference that copper was co-extruded in an amount of 4.2%. The obtained results are summarized in the table below.

### Example 9.

The experiment of Example 6 was repeated, with this difference that zinc was co-extruded as a thermal insulation value increasing agent in an amount of 0.8%. The obtained results are summarized in the table below.

### Example 10.

The experiment of Example 9 was repeated, with this difference that styrene polymer having a hexabromium cyclododecane (HBCD) content of 1.6% and an amount of dicumyl peroxide of 0.4% were supplied to an extruder, the amount of zinc being 1.2%. The obtained results are summarized in the table below.

### Comparative example 3.

The experiment of Example 1 was repeated, with this difference that CuSn₁₀ was co-extruded as a thermal insulation value increasing agent in an amount of 0.8%. The obtained results are summarized in the table below.

### Comparative example 4.

The experiment of Example 11 was repeated, with this difference that CuSn₁₀ was co-extruded in an amount of 1.6%. The obtained results are summarized in the table below.

### Comparative example 5.

The experiment of Example 11 was repeated, with this difference that CuSn₁₀ was co-extruded in an amount of 2.8%. The obtained results are summarized in the table below.

### Comparative example 6.

The experiment of Example 11 was repeated, with this difference that CuSn₁₀ was co-extruded in an amount of 3.2%. The obtained results are summarized in the table below.

### Example 11.

A blowing agent and styrene polymer having a particle size of 0.4 mm and a HBCD content of 1.6% and dicumyl peroxide in an amount of 0.3% were supplied to an extruder, with 0.4% dicumyl being co-extruded. Copper in powder form was co-extruded as a thermal insulation value increasing agent in an amount of 1.6%. The obtained results are summarized in the table below.

### Example 12.

The experiment of Example 15 was repeated, with this difference that the styrene polymer contained 2.0% HBCD and that 0.5% dicumyl was supplied to the extruder. The amount of copper that was supplied was 3.2%. The obtained results are summarized in the table below.

### Example 13.

The experiment of Example 16 was repeated, with this difference that copper was co-extruded in an amount of 4.0%. The obtained results are summarized in the table below.

### Example 14.

The experiment of Example 16 was repeated, with this difference that copper was supplied as the masterbatch. The obtained results are summarized in the table below.

### Comparative example 7.

A blowing agent and styrene polymer having a particle size X were supplied to an extruder, with Al(OH)₃ being co-extruded as a thermal insulation value increasing agent in an amount of 17%. The obtained results are summarized in the table below.

### Comparative example 8.

The experiment of Example 19 was repeated, with this difference that 28% Mg(OH)₂ was co-extruded. The obtained results are summarized in the table below.

### Comparative example 9.

The experiment of Example 19 was repeated, with this difference that Al₂O₃ was co-extruded in an amount of 25%. The obtained results are summarized in the table below.

### Comparative example 10.

The experiment of Example 19 was repeated, with this difference that Al(OH)₃ was co-extruded in an amount of 29%. The obtained results are summarized in the table below.

### Example 15.

The experiment of Example 15 was repeated, with this difference that styrene polymer that was used had a HBCD content of 0.8% and a dicumyl peroxide content of 0.35%, with dicumyl being supplied to the extruder in an amount of 0.2%. Iron was co-extruded as a thermal insulation value increasing agent in an amount of 3.0%. The obtained results are summarized in the table below.

| Example, no. | % HBCD | % Dicumylperoxide | % Dicumyl | % Main element added | Thermal insul. value increasing agent | Application | Particle size µm | Lambda, W/m K | Colour | Pressure strength kg/m³ | Break strength kg/m³ |
|---|---|---|---|---|---|---|---|---|---|---|---|
| 1 | 0.8 | 0.3 | | 1.6 | Cu | powder | 8 | 0.0326 | Black | | |
| 2 | 0.8 | 0.3 | | 3.2 | Cu | powder | 8 | 0.0309 | Black | | |
| 3 | 0.8 | 0.3 | | 4 | Cu | powder | 8 | 0.0314 | Black | | |
| Comp. example 1 | 0.8 | - | | 0.4 | Al | powder | 5 | 0.0333 | Black | | |
| Comp. example 2 | 0.8 | 0.3 | | 0.4 | Al | powder | 5 | 0.0334 | Black | | |
| 4 | 0.8 | 0.3 | | 1.2 | CuZn₇₀ | powder | 8 | 0.0328 | Black | | |
| 5 | 0.8 | 0.3 | | 2.8 | CuZn₇₀ | powder | 8 | 0.0319 | Black | | |
| 6 | 0.8 | 0.3 | | 1.2 | Cu | M/8 | 8 | 0.0319 | Black | | |
| 7 | 0.8 | 0.3 | | 2.4 | Cu | M/8 | 8 | 0.032 | Black | | |
| 8 | 0.8 | 0.3 | | 4.2 | Cu | M/8 | 8 | 0.0312 | Black | 98 | 177 |
| 9 | 0.8 | 0.3 | | 0.8 | Zn | M/8 | 8 | 0.033 | Black | 111 | 213 |
| 10 | 1.6 | 0.4 | | 1.2 | Zn | M/8 | 8 | 0.035 | Black | | |
| Comparative example 3 | 0.8 | 0.3 | | 0.8 | CuSn₇₀ | M/8 | 8 | 0.0318 | Black | | |
| Comparative example 4 | 0.8 | 0.3 | | 1.6 | CuSn₇₀ | M/8 | 8 | 0.0317 | Black | | |
| Comparative example 5 | 0.8 | 0.3 | | 2.8 | CuSn₇₀ | M/b | 8 | 0.0315 | Black | 94 | 177 |
| Comparative example 6 | 0.8 | 0.3 | | 3.2 | CuSn₇₀ | M/8 | 8 | 0.0309 | Black | | |
| 11 | 1.6 | 0.3 | 0.4 | 1.6 | Cu | powder | 8 | 0.0335 | Coppery | | |
| 12 | 2 | 0.3 | 0.5 | 3.2 | Cu | powder | 8 | 0.032 | Coppery | | |
| 13 | 2 | 0.3 | 0.5 | 4 | Cu | powder | 8 | 0.0309 | Coppery | | |
| 14 | 2 | 0.3 | 0.5 | 3.2 | Cu | M/8 | 5 | 0.031 | Coppery | 106 | 190 |
| Comparative example 7 | 2 | | | 17 | Al(ON)₃ | powder | 5 | 0.0333 | White | | |
| Comparative example 8 | | | | 28 | Mg(OH)₂ | powder | 5 | | White | | |
| Comparative example 9 | | | | 25 | Al₂O₃ | powder | 5 | | White | | |
| Comparative example 10 | | | | 29 | Al(OH)₃ | powder | 5 | 0.0332 | White | | |
| 15 | 0.8 | 0.35 | 0.2 | 3 | Fe | powder | 5 | 0.0321 | Black | | |

From the above table it follows that styrene polymer comprising copper as the thermal insulation value increasing agent provides a favourable lambda value. The same obtains if a copper alloy is used as the thermal insulation value increasing agent (see Examples 4 and 5 and Examples 11-14). If in particular an additional amount of fire retardant is added (see Examples 15-18), the product obtained will not only have a favourable lambda value, but it will moreover meet stringent requirements as regards fire retardation, in particular the B2 test requirement. Although the above Examples relate to a styrene polymer having a particle size of 0.4 mm, satisfactory results were also obtained with styrene polymer having a particle size of, for example, > 2.4 mm or 0.7-1.0 mm.

## Claims

1. A method for the production of expandable polystyrene (EPS), wherein styrene polymer, a blowing agent, a thermal insulation value increasing agent and usual additives are jointly extruded in an extruder, **characterized in that** a metal selected from the group of iron, copper and zinc, an alloy with the provisio that a copper containing alloy is excluded, except copper alloys containing aluminium and CuZn₇₀ or a combination thereof is used as the thermal insulation value increasing agent.

2. A method according to claim 1, **characterized in that** copper, a copper- alloy containing aluminium, CuZn₇₀, or a combination thereof is used.

3. A method according to claims 1-2, **characterized in that** the amount of thermal insulation value increasing agent is 1-10 wt. %, based on the amount of styrene polymer.

4. A method according to claim 3, **characterized in that** amount of thermal insulation value increasing agent is 2-5 wt. %, based on the amount of styrene polymer.

5. A method according to any one or more of the preceding claims 1-4, **characterized in that** copper is used in an amount of 2.5-3 wt. %, based on the amount of styrene polymer.

6. A method according to any one or more of the claims 1-5, **characterized in that** the thermal insulation value increasing agent is added in the form of a powder.

7. A method according to any one or more of the preceding claims, **characterized in that** the styrene polymer has a particle size of < 0,4 mm.

8. A method according to any one or more of the claims 1-6, **characterized in that** the styrene polymer has a particle size of > 2.4 mm.

9. A method according to any one or more of the claims 1-6, **characterized in that** the styrene polymer has a particle size of 0.7-1.0 mm.

10. A method according to any one or more of the claims 1-6, **characterized in that** the styrene polymer has a particle size of 1.0-2.4 mm.

11. A method according to any one or more of the preceding claims, **characterized in that** the styrene polymer comprises a fire retardant, in particular hexabromium cyclododecane (HBCD).

12. A method according to any one or more of the preceding claims, **characterized in that** additionally other thermal insulation value increasing agents are co-extruded.

13. A method according to claim 12, **characterized in that** one or more of the substances graphite, aluminium powder, Al(OH)₃, Mg(OH)₂ and Al₂O₃ is (are) extruded.

14. A method according to any one or more of the preceding claims, **characterized in that** additionally one or more fire retardants selected from the group consisting of hexabromium cyclododecane (HBCD), dicumyl peroxide and 2,3-dimethyl-2,3-diphenylbutane are separately supplied to the extruder during the extrusion process.

15. A method according to claim 14, **characterized in that** said additional amount of fire retardant ranges from 1.0 to 8 wt. %, based on the amount of styrene polymer,

16. Particulate, expandable polystyrene which can be processed into a foam having a fine cell structure and a low density, and which, in order to improve the thermal insulation value thereof, contains a thermal insulation value increasing agent, **characterized in that** a metal selected from the group consisting of iron, copper and zinc, and alloy with the provisio that a copper containing alloy is excluded, except copper alloys containing aluminium and CuZn₇₀ or a combination thereof is present in the polystyrene particles as a thermal insulation value increasing material in a homogeneous distribution.

17. Particulate expandable polystyrene according to claim 16, **characterized in that** the thermal insulation value increasing agent is present in an amount of 1-10 wt.% with a base of styrene polymer.

18. Particulate expandable polystyrene according to claim 16, **characterized in that** the thermal insulation value increasing agent is present in an amount of 2-5 wt.% with a base of styrene polymer.

19. Particulate expandable polystyrene according to any one or more of the claims 16-18, **characterized in that** the thermal insulation value increasing agent is added in the form of a powder.

20. Particulate expandable polystyrene according to any one or more of the claims 16-19, **characterized in that** the styrene polymer has a particle size of < 0.4 mm.

21. Particulate expandable polystyrene according to any one or more of the claims 16-19, **characterized in that** the styrene polymer has a particle size of > 2.4 mm.

22. Particulate expandable polystyrene according to any one or more of the claims 16-19, **characterized in that** the styrene polymer has a particle size of 0.7-1.0 mm.

23. Particulate expandable polystyrene according to any one or more of the claims 16-19, **characterized in that** the styrene polymer has a particle size of 1.0-2.4 mm.

24. Particulate expandable polystyrene according to any one or more of the claims 16-23, **characterized in that** the styrene polymer comprises a fire retardant, in particular hexabromium cyclododecane (HBCD).

25. Particulate expandable polystyrene according to any one or more of the claims 16-24, **characterized in that** the material obtained following the extrusion process additionally comprises other thermal insulation value increasing agents in particulate form, selected from the the group consisting of graphite, aluminium powder, Al(OH)₃, Mg(OH)₂ and Al₂O₃.

26. Polystyrene foam materials with a base of particulate expandable polystyrene according to claims 16-25.

27. Use of polystyrene foam materials according to claim 26 for thermal insulation purposes.

## Patentansprüche

1. Verfahren zur Herstellung von expandierbarem Polystyrol (EPS), bei dem Styrolpolymer, ein Blasmittel, ein Mittel zum Erhöhen des Wärmeisolationswertes und übliche Additive gemeinsam in einem Extruder extrudiert werden, **dadurch gekennzeichnet, dass** ein Metall, ausgewählt aus der aus Eisen, Kupfer und Zink, einer Legierung, unter der Voraussetzung, dass eine Kupfer enthaltende Legierung ausgeschlossen ist, mit Ausnahme von Kupferlegierungen, die Aluminium und CuZn₇₀ enthalten, oder einer Kombination hiervon bestehenden Gruppe, als Mittel zum Erhöhen des Wärmeisolationswertes verwendet wird.

2. Verfahren nach Anspruch 1, **dadurch gekennzeichnet, dass** Kupfer, eine Kupferlegierung enthaltend Aluminium, CuZn₇₀ oder eine Kombination hiervon verwendet wird.

3. Verfahren nach den Ansprüchen 1-2, **dadurch gekennzeichnet, dass** die Menge des Mittels zum Erhöhen des Wärmeisolationswertes 1-10 Gew.% auf der Basis der Menge des Styrolpolymers beträgt.

4. Verfahren nach Anspruch 3, **dadurch gekennzeichnet, dass** die Menge des Mittels zur Erhöhung des Wärmeisolationswertes 2-5 Gew.% auf der Basis der Menge des Styrolpolymers beträgt.

5. Verfahren nach einem oder mehreren der vorhergehenden Ansprüche 1-4, **dadurch gekennzeichnet, dass** Kupfer in einer Menge von 2,5-3 Gew.% auf der Basis der Menge des Styrolpolymers verwendet wird.

6. Verfahren nach einem oder mehreren der Ansprüche 1-5, **dadurch gekennzeichnet, dass** das Mittel zur Erhöhung des Wärmeisolationswertes in der Form eines Pulvers zugesetzt wird.

7. Verfahren nach einem oder mehreren der vorhergehenden Ansprüche, **dadurch gekennzeichnet, dass** das Styrolpolymer eine Partikelgröße von < 0,4 mm besitzt.

8. Verfahren nach einem oder mehreren der Ansprüche 1-6, **dadurch gekennzeichnet, dass** das Styrolpolymer eine Partikelgröße von > 2,4 mm besitzt.

9. Verfahren nach einem oder mehreren der Ansprüche 1-6, **dadurch gekennzeichnet, dass** das Styrolpolymer eine Partikelgröße von 0,7-1,0 mm besitzt.

10. Verfahren nach einem oder mehreren der Ansprüche 1-6, **dadurch gekennzeichnet, dass** das Styrolpolymer eine Partikelgröße von 1,0-2,4 mm besitzt.

11. Verfahren nach einem oder mehreren der vorhergehenden Ansprüche, **dadurch gekennzeichnet, dass** das Styrolpolymer ein feuerhemmendes Mittel, insbesondere Hexabromcyclododecan (HBCD), enthält.

12. Verfahren nach einem oder mehreren der vorhergehenden Ansprüche, **dadurch gekennzeichnet, dass** zusätzlich andere Mittel zur Erhöhung des Wärmeisolationswertes coextrudiert werden.

13. Verfahren nach Anspruch 12, **dadurch gekennzeichnet, dass** eine oder mehrere der Substanzen Graphit, Aluminiumpulver, Al(OH)₃, Mg(OH)₂ und Al₂O₃ extrudiert wird (werden).

14. Verfahren nach einem oder mehreren der vorhergehenden Ansprüche, **dadurch gekennzeichnet, dass** zusätzlich ein oder mehrere feuerhemmende Mittel, ausgewählt aus der aus Hexabromcyclododecan (HBCD), Dicumylperoxid und 2,3-Dimethyl-2,3-diphenylbutan bestehenden Gruppe, während des Extrusionsprozesses separat dem Extruder zugeführt werden.

15. Verfahren nach Anspruch 14, **dadurch gekennzeichnet, dass** die zusätzliche Menge an feuerhemmenden Mitteln von 1,0-8 Gew.% auf der Basis der Menge des Styrolpolymers reicht.

16. Partikelförmiges expandierbares Polystyrol, das zu einem Schaum mit einer feinen Zellstruktur und einer geringen Dichte verarbeitet werden kann und das zur Verbesserung seines Wärmeisolationswertes ein Mittel zur Erhöhung des Wärmeisolationswertes enthält, **dadurch gekennzeichnet, dass** ein Metall, ausgewählt aus der aus Eisen, Kupfer und Zink und einer Legierung, unter der Voraussetzung, dass eine Kupfer enthaltende Legierung ausgeschlossen ist, mit der Ausnahme von Kupferlegierungen, die Aluminium und CuZn₇₀ enthalten, oder einer Kombination hiervon bestehenden Gruppe, in den Polystyrolpartikeln als Mittel zur Erhöhung des Wärmeisolationswertes in einer homogenen Verteilung vorhanden ist.

17. Partikelförmiges expandierbares Polystyrol nach Anspruch 16, **dadurch gekennzeichnet, dass** das Mittel zur Erhöhung des Wärmeisolationswertes in einer Menge von 1-10 Gew.% mit einer Basis aus Styrolpolymer vorhanden ist.

18. Partikelförmiges eypandierbares Polystyrol nach Anspruch 16, **dadurch gekennzeichnet, dass** das Mittel zur Erhöhung des Wärmeisolationswertes in einer Menge von 2-5 Gew.% mit einer Basis aus Styrolpolymer vorhanden ist.

19. Partikelförmiges expandierbares Polystyrol nach einem oder mehreren der Ansprüche 16-18, **dadurch gekennzeichnet, dass** das Mittel zur Erhöhung des Wärmeisolationswertes in der Form eines Pulvers zugesetzt wird.

20. Partikelförmiges expandierbares Polystyrol nach einem oder mehreren der Ansprüche 16-19, **dadurch gekennzeichnet, dass** das Styrolpolymer eine Partikelgröße von < 0,4 mm besitzt.

21. Partikelförmiges expandierbares Polystyrol nach einem oder mehreren der Ansprüche 16-19, **dadurch gekennzeichnet, dass** das Styrolpolymer eine Partikelgröße von > 2,4 mm besitzt.

22. Partikelförmiges expandierbares Polystyrol nach einem oder mehreren der Ansprüche 16-19, **dadurch gekennzeichnet, dass** das Styrolpolymer eine Partikelgröße von 0,7-1,0 mm besitzt.

23. Partikelförmiges expandierbares Polystyrol nach einem oder mehren der Ansprüche 16-19, **dadurch gekennzeichnet, dass** das Styrolpolymer eine Partikelgröße von 1,0-2,4 mm hat.

24. Partikelförmiges expandierbares Polystyrol nach einem oder mehreren der Ansprüche 16-23, **dadurch gekennzeichnet, dass** das Styrolpolymer ein feuerhemmendes Mittel, insbesondere Hexabromcyclododecan (HBCD), enthält.

25. Partikelförmiges expandierbares Polystyrol nach einem oder mehreren der Ansprüche 16-24, **dadurch gekennzeichnet, dass** das nach dem Extrusionsprozess erhaltene Material zusätzlich andere Mittel zur Erhöhung des Wärmeisolationswertes in partikelförmiger Form enthält, die aus der aus Graphit, Aluminiumpulver, Al(OH)₃, Mg(OH)₂ und Al₂O₃ bestehenden Gruppe ausgewählt sind.

26. Polystyrolschaummaterialien mit einer Basis aus partikelförmigem expandierbaren Polystyrol nach den Patentansprüchen 16-25.

27. Verwendung von Polystyrolschaummaterialien nach Anspruch 26 für Wärmeisolationszwecke.

## Revendications

1. Procédé de production de poly(styrène) expansible (EPS), dans lequel un polymère poly(styrène), un agent d'expansion, un agent d'accroissement de valeur d'isolation thermique et des additifs habituels sont conjointement extrudés dans une extrudeuse, **caractérisé en ce qu'**un métal choisi dans le groupe du fer, du cuivre et du zinc, un alliage à la condition qu'un alliage contenant du cuivre soit exclu, à l'exception des alliages de cuivre contenant de l'aluminium et du CuZn₇₀, ou une combinaison de ceux-ci est utilisé comme agent d'accroissement de valeur d'isolation thermique.

2. Procédé selon la revendication 1, **caractérisé en ce que** du cuivre, un alliage de cuivre contenant de l'aluminium, du CuZn₇₀ ou une combinaison de ceux-ci sont utilisés.

3. Procédé selon les revendications 1 à 2, **caractérisé en ce que** la quantité d'agent d'accroissement de valeur d'isolation thermique est de 1 à 10 % en poids, sur la base de la quantité de polymère de styrène.

4. Procédé selon la revendication 3, **caractérisé en ce que** la quantité d'agent d'accroissement de valeur d'isolation thermique est de 2 à 5 % en poids, sur la base de la quantité de polymère de styrène.

5. Procédé selon l'une quelconque ou plus des revendications précédentes 1 à 4, **caractérisé en ce que** du cuivre est utilisé en une quantité de 2,5 à 3 % en poids, sur la base de la quantité de polymère de styrène.

6. Procédé selon l'une quelconque ou plus des revendications 1 à 5, **caractérisé en ce que** l'agent d'accroissement de valeur d'isolation thermique est ajouté sous la forme d'une poudre.

7. Procédé selon l'une quelconque ou plus des revendications précédentes, **caractérisé en ce que** le polymère de styrène a une taille de particule de < 0,4 mm.

8. Procédé selon l'une quelconque ou plus des revendications 1 à 6, **caractérisé en ce que** le polymère de styrène a une taille de particule de > 2,4 mm.

9. Procédé selon l'une quelconque ou plus des revendications 1 à 6, **caractérisé en ce que** le polymère de styrène a une taille de particule de 0,7 à 1,0 mm.

10. Procédé selon l'une quelconque ou plus des revendications 1 à 6, **caractérisé en ce que** le polymère de styrène a une taille de particule de 1,0 à 2,4 mm.

11. Procédé selon l'une quelconque ou plus des revendications précédentes, **caractérisé en ce que** le polymère de styrène comprend un produit ignifuge, en particulier de l'hexabromocyclododécane (HBCD).

12. Procédé selon l'une quelconque ou plus des revendications précédentes, **caractérisé en ce que** de plus d'autres agents d'accroissement de valeur d'isolation thermique sont coextrudés.

13. Procédé selon la revendication 12, **caractérisé en ce qu'**une ou plusieurs des substances de graphite, de poudre d'aluminium, de Al(OH)₃, de Mg(OH)₂ et de Al₂O₃ est (sont) extrudée(s).

14. Procédé selon l'une quelconque ou plus des revendications précédentes, **caractérisé en ce que** de plus un ou plusieurs produits ignifuges choisis dans le groupe constitué de l'hexabromocyclododécane (HBCD), du peroxyde de dicumyle et du 2,3-diméthyl-2,3-diphénylbutane sont séparément délivrés à l'extrudeuse pendant le procédé d'extrusion.

15. Procédé selon la revendication 14, **caractérisé en ce que** ladite quantité additionnelle de produit ignifuge va de 1,0 à 8 % en poids, sur la base de la quantité de polymère de styrène.

16. Poly(styrène) expansible particulaire qui peut être transformé en une mousse ayant une structure alvéolaire fine et une faible masse volumique, et qui, afin d'améliorer la valeur d'isolation thermique de celui-ci, contient un agent d'accroissement de valeur d'isolation thermique, **caractérisé en ce qu'**un métal choisi dans le groupe constitué du fer, du cuivre et du zinc, et un alliage à la condition qu'un alliage contenant du cuivre soit exclu, à l'exception des alliages de cuivre contenant de l'aluminium et du CuZn₇₀, ou une combinaison de ceux-ci est présent dans les particules de poly(styrène) comme matériau d'accroissement de valeur d'isolation thermique en une distribution homogène.

17. Poly(styrène) expansible particulaire selon la revendication 16, **caractérisé en ce que** l'agent d'accroissement de valeur d'isolation thermique est présent en une quantité de 1 à 10 % en poids avec une base de polymère de styrène.

18. Poly(styrène) expansible particulaire selon la revendication 16, **caractérisé en ce que** l'agent d'accroissement de valeur d'isolation thermique est présent en une quantité de 2 à 5 % en poids avec une base de polymère de styrène.

19. Poly(styrène) expansible particulaire selon l'une quelconque ou plus des revendications 16 à 18, **caractérisé en ce que** l'agent d'accroissement de valeur d'isolation thermique est ajouté sous la forme d'une poudre.

20. Poly(styrène) expansible particulaire selon l'une quelconque ou plus des revendications 16 à 19, **caractérisé en ce que** le polymère de styrène a une taille de particule de < 0,4 mm.

21. Poly(styrène) expansible particulaire selon l'une quelconque ou plus des revendications 16 à 19, **caractérisé en ce que** le polymère de styrène a une taille de particule de > 2,4 mm.

22. Poly(styrène) expansible particulaire selon l'une quelconque ou plus des revendications 16 à 19, **caractérisé en ce que** le polymère de styrène a une taille de particule de 0,7 à 1,0 mm.

23. Poly(styrène) expansible particulaire selon l'une quelconque ou plus des revendications 16 à 19, **caractérisé en ce que** le polymère de styrène a une taille de particule de 1,0 à 2,4 mm.

24. Poly(styrène) expansible particulaire selon l'une quelconque ou plus des revendications 16 à 23, **caractérisé en ce que** le polymère de styrène comprend un produit ignifuge, en particulier de l'hexabromocyclododécane (HBCD).

25. Poly(styrène) expansible particulaire selon l'une quelconque ou plus des revendications 16 à 24, **caractérisé en ce que** le matériau obtenu à la suite du procédé d'extrusion comprend de plus d'autres agents d'accroissement de valeur d'isolation thermique sous forme particulaire, choisis dans le groupe constitué du graphite, de poudre d'aluminium, de Al(OH)₃, de Mg(OH)₂ et de Al₂O₃.

26. Matériaux alvéolaires de poly(styrène) avec une base de poly (styrène) expansible particulaire selon les revendications 16 à 25.

27. Utilisation de matériaux alvéolaires de poly(styrène) selon la revendication 26 à des fins d'isolation thermique.
